# EUROPÄISCHE PATENTANMELDUNG

(11) **EP 3 734 478 A1**
(43) Veröffentlichungstag der Anmeldung: **04.11.2020**
(21) Anmeldenummer: 19171549.9
(22) Anmeldetag: 29.04.2019
(51) Int. Cl.: G06F 21/33, H04L 9/32

(54) **VERFAHREN ZUR VERGABE VON ZERTIFIKATEN, LEITSYSTEM, VERWENDUNG EINES SOLCHEN, TECHNISCHE ANLAGE, ANLAGENKOMPONENTE UND VERWENDUNG EINES IDENTITÄTSPROVIDERS**

(71) Anmelder: Siemens Aktiengesellschaft, 80333 München (DE)
(72) Erfinder: Geissler, Klaus, 76532 Baden-Baden (DE); Kuznetsov, Sergej, 76767 Hagenbach (DE)

(57) **Zusammenfassung**

Die Erfindung betrifft ein Verfahren zur Vergabe von Zertifikaten (C) für Anlagenkomponenten (G) einer technischen Anlage, bei dem für Anlagenkomponenten (G) Zertifikatsanträge (CSR) an eine Registrierungsstelle (RA) übermittelt werden, und die Registrierungsstelle (RA) entscheidet, welche Zertifikatsanträge (CSR) genehmigt werden, wobei auf genehmigte Zertifikatsanträge (CSR) hin ein Zertifikat (C) erstellt und bevorzugt der jeweiligen Anlagenkomponente (G) übermittelt wird, wobei vor der Übermittelung wenigstens eines Zertifikatsantrages (CSR) an die Registrierungsstelle (RA) wenigstens ein Identitätsmerkmal (IM), welches die Identität und insbesondere die Rolle eines den wenigstens einen Zertifikatsantrag (CSR) stellenden Benutzers (B) repräsentiert, bereitgestellt wird, und das wenigstens eine Identitätsmerkmal (IM) dem wenigstens einen Zertifikatsantrag (CSR) hinzugefügt wird, wodurch dieser personalisiert wird, und der wenigstens eine personalisierte Zertifikatsantrag (pCSR) an die Registrierungsstelle (RA) übermittelt wird, und die Entscheidung, ob der wenigstens eine personalisierte Zertifikatsantrag (pCSR) genehmigt wird, unter Berücksichtigung des wenigstens einen hinzugefügten Identitätsmerkmals (IM) getroffen wird. Darüber hinaus betrifft die Erfindung ein Leitsystem (LS), die Verwendung eines solchen, eine technische Anlage, eine Anlagenkomponente (G) und die Verwendung eines Identitätsproviders (IPr).

## Beschreibung

Die Erfindung betrifft ein Verfahren zur Vergabe von Zertifikaten für Anlagenkomponenten einer technischen Anlage, bei dem für Anlagenkomponenten Zertifikatsanträge an eine Registrierungsstelle übermittelt werden, und die Registrierungsstelle entscheidet, welche Zertifikatsanträge genehmigt werden, wobei auf genehmigte Zertifikatsanträge hin ein Zertifikat erstellt und bevorzug der jeweiligen Anlagenkomponente übermittelt wird. Darüber hinaus betrifft die Erfindung ein Leitsystem, die Verwendung eine solchen, eine technische Anlage, eine Anlagenkomponente und die Verwendung eines Identitätsproviders.

Im Kontext technischer Anlage kommen digitale Zertifikate zum Einsatz. Insbesondere für den Fall, dass es sich um Zertifikate handelt, die zur Laufzeit verwendet werden, spricht man auch von operativen Zertifikaten. Über Zertifikate kann eine sichere, nicht-kompromittierte und vertrauenswürdige Kommunikation zwischen unterschiedlichen Anlagenkomponenten, etwa Geräten und/oder Applikationen, ermöglicht werden. Durch die Verwendung von Zertifikaten kann beispielsweise eine Authentifikation und eine Kommunikationsintegrität von Kommunikationsteilnehmern, etwa in einem Leitsystem einer technischen Anlage, durch kryptographische Mittel erreicht werden.

Im Rahmen einer Public Key Infrastruktur einer technischen Anlage werden sogenannte Registrierungsstellen (englisch: registration authorities oder kurz: RA) verwendet, um Zertifikatsanträge (sogenannte certificate signing requests oder kurz: CSR) entgegenzunehmen und sie - im Falle der Genehmigung/Validierung - an eine Zertifizierungsstelle (englisch: certificate authority oder kurz: CA) weiterzuleiten. Dabei ist die RA die Instanz, die entscheidet, welche Zertifikatsanfragen genehmigt/validiert werden und die CA die Instanz, welche die Zertifikate erstellt.

Bei den Zertifikatsanträgen kann es sich um Anträge zwecks der initialen Beantragung (Bootstrapping) oder der Erneuerung (Update) von Zertifikaten handeln.

Anlagenkomponenten können die Zertifikate, die sie beispielsweise für die Nutzung verschiedener sicherer Protokolle wie z.B. TLS oder OPC UA benötigen, selbst beantragen. Eine Anlagenkomponente in der Rolle eines Clients bzw. eines Antragstellers richtet ihren Zertifikatsantrag an die Registrierungsstelle (RA), welche den Antrag im Falle der Genehmigung/Validierung an die Zertifizierungsstelle (CA), die sich beispielsweise in der Anlage ("Onsite-CA") oder einem Trust Center ("Offsite-CA" oder "CA as a Service") befindet, weiterleitet.

Nach Kenntnisstand der Anmelderin sind verschiedenen Ansätze bekannt, wie die RA eine Entscheidung treffen kann, ob eine Anfrage (Zertifikatsantrag) genehmigt/validiert und an die CA weitergeleitet und dann von dieser ein angefragtes Zertifikat erstellt werden darf.

Ein der Anmelderin bekannter Ansatz besteht darin, dass die Entscheidung über die Zertifikatsgenehmigung von einer Person, die auch als RA Administrator bezeichnet wird, getroffen wird. Diese Person ist dann berechtigt, auf der RA die eingegangenen Zertifizierungsanfragen zu genehmigen und/oder Geräte noch vor der Zertifizierungsanfrage in eine Whitelist (Inventory) einzutragen.

Der Nachteil dieses Ansatzes ist die Notwendigkeit, die Person, die der RA Administrator ist, verfügbar zu haben. Auch wenn in der konventionellen IT-Landschaft die Verfügbarkeit oftmals nicht kritisch ist, kann dies im industriellen Umfeld, etwa wenn ein dringender Umtausch eines Gerätes einer technischen Anlage während einer Nachtschicht erforderlich ist, problematisch sein.

Ein weiterer der Anmelderin bekannter Ansatz ist, digital signierte Zertifikatsanfragen an die RA zu senden. Dabei wird beim Bootstrapping der Zertifikatsantrag in der Regel mit einem Herstellergerätezertifikat (englisch: manufacturer device certificate, kurz: MDC) signiert, während beim Update in der Regel das zuletzt ausgestellte operative Zertifikat (OC) zum Signieren verwendet wird. Alternativ oder zusätzlich zum Gerätezertifikat, das beispielsweise während der Fertigung des Geräts von einer Zertifizierungsstelle des Herstellers des Geräts ausgestellt werden kann, kann auch ein Kundengerätezertifikat (englisch: customer device certificate, kurz: CDC) verwendet werden. Dabei handelt es sich in der Regel um ein Zertifikat, das das entsprechende Gerät nach einer Prüfung in der technischen Anlage erhalten hat.

Damit die Registrierungsstelle (RA) die Zertifikatsanträge (CSR) bearbeiten kann, muss ihr bei dieser Variante im Falle des Bootstrappings wenigstens ein Gerätezertifikat (und/oder Kundenzertifikat) und im Falle des Updates wenigstens ein operatives Zertifikat vorliegen.

Der Nachteil dieses Ansatzes ist die Notwendigkeit, ein bereits existierendes Zertifikat zu verwenden, was unter Umständen software- und hardware-technisch sehr anspruchsvoll ist.

Der Erfindung liegt die Aufgabe zugrunde, ein verbessertes Zertifikatsmanagement für eine technische Anlage anzugeben.

Diese Aufgabe wird bei einem Verfahren der eingangs genannten Art dadurch gelöst, dass vor der Übermittelung wenigstens eines Zertifikatsantrages an die Registrierungsstelle wenigstens ein Identitätsmerkmal, welches die Identität und insbesondere die Rolle eines den wenigstens einen Zertifikatsantrag stellenden Benutzers repräsentiert, bereitgestellt wird, und das wenigstens eine Identitätsmerkmal dem wenigstens einen Zertifikatsantrag hinzugefügt wird, wodurch dieser personalisiert wird, und der wenigstens eine personalisierte Zertifikatsantrag an die Registrierungsstelle übermittelt wird, und die Entscheidung, ob der wenigstens eine personalisierte Zertifikatsantrag genehmigt wird, unter Berücksichtigung des wenigstens einen hinzugefügten Identitätsmerkmals getroffen wird.

Der Grundgedanke der vorliegenden Erfindung besteht mit anderen Worten darin, die Identität und insbesondere die Rollenzugehörigkeit eines bzw. desjenigen Benutzers, der die Zertifizierungsanfrage stellt bzw. veranlasst, in die Entscheidung über die Zertifikatsvergabe mit einzubeziehen. Während bisher vorgesehen war, Zertifikate etwa nur an bekannte Geräte zu vergeben (beispielsweise mit vorhandenem MDC oder CDC), ist erfindungsgemäß vorgesehen, dass Zertifikatsanfragen positiv beantwortet werden, wenn sie von bekannten Benutzern mit entsprechender Berechtigung signiert sind. So wird es möglich, dass die Rollenzugehörigkeit des (jeweiligen) Antragsstellers eine automatische Vergabe eines Zertifikats ermöglicht.

Die Entscheidung über die Zertifizierungsgenehmigung wird so vorteilhaft an andere Personen delegiert. Statt eines RA Administrators können die Anlagen-Betreuer diese Entscheidung treffen. Dies ist aus Workflow-Sicht und aus Verfügbarkeitsgründen von Vorteil. Die Entscheidungen, welche Anfragen zu validieren, also zu genehmigen sind, können dann diejenigen Personen treffen, die die Anlage betreuen und nicht die, die sich mit der IT-Verwaltung beschäftigen.

Die Verwaltung einer technischen Anlage kann deutlich vereinfacht werden, insbesondere können deutlich mehr Zertifikatsanfragen automatisiert von einer Registrierungsstelle RA verarbeitet werden, wenn diese auf die erfindungsgemäße Weise in personalisierter Form eingehen.

Mehrere Divisionen können die erfindungsgemäße Lösung basierend auf einem Identitätsprovider IPR, etwa UMC mitverwenden. Es ist auch möglich, eine zentrale Software-RA in mehreren Produkten mitzuverwenden.

Für den Fall, dass der wenigstens eine personalisierte Zertifikatsantrag (kann auch als Zertifizierungsanfrage bezeichnet werden) von der Registrierungsstelle genehmigt wird, kontaktiert die Registrierungsstelle bevorzugt eine Zertifizierungsstelle. Die Zertifizierungsstelle wird insbesondere veranlasst, ein Zertifikat für die wenigstens eine Anlagenkomponente zu erstellen. Zweckmäßiger Weise gilt, dass nur auf von der Registrierungsstelle genehmigte Zertifikatsanträge hin ein Zertifikat erstellt und bevorzug der jeweiligen Anlagenkomponente übermittelt wird.

Die Zertifizierungsstelle der technischen Anlage ist eine Instanz, die die (digitalen) Zertifikate herausgibt (Bereitstellung/Zuweisung) und deren Gültigkeit überprüft (Integritätssicherung). Die Zertifizierungsstelle bildet in der Regel den Kern einer Public-Key-Infrastruktur (PKI) einer technischen Anlage. Sie wird auch als Certification Authority (CA) bezeichnet.

Ein für eine Anlagenkomponente erstelltes Zertifikat kann dann an die Anlagenkomponente übertragen werden. Die Übertragung kann beispielsweise von der Registrierungsstelle vorgenommen bzw. veranlasst werden.

Es sei angemerkt, dass sich das erfindungsgemäße Verfahren sowohl für die initiale (erstmalige) Vergabe eines Zertifikates als auch die Zertifikatserneuerung (erneute Vergabe) eignet. Das erfindungsgemäße Verfahren zur Vergabe von Zertifikaten ist somit ein Verfahren zur initialen Vergabe und/oder Erneuerung von Zertifikaten.

Unter einer Registrierungsstelle einer technischen Anlage wird eine funktionelle Instanz verstanden, die Registrierungsanfragen wie Zertifikatsanträge von Komponenten der technischen Anlage entgegennimmt, diese prüft und im Erfolgsfall insbesondere an eine Zertifizierungsstelle der technischen Anlage weiterleitet. Im vorliegenden Fall ist die Registrierungsstelle vor allem dafür vorgesehen, Zertifikatsanträge von Anlagenkomponenten der technischen Anlage zu behandeln. Die Registrierungsstelle kann eine lokale Registrierungsstelle sein, die mit einer übergeordneten globalen Registrierungsstelle kommunizieren kann, welche beispielsweise wiederum direkt in Verbindung mit einer Zertifizierungsstelle der technischen Anlage stehen kann. Die Registrierungsstelle kann einen Registrierungsservice umfassen oder durch einen solchen gegeben sein.

Bei der technischen Anlage handelt es sich insbesondere um eine Fertigungs- oder Prozessanlage. Es kann sich etwa um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen in der Regel jeweils über ein Leitsystem oder zumindest ein computerunterstütztes Modul zur Steuerung und Regelung des ablaufenden Prozesses oder der Produktion.

Mit dem Begriff "Public-Key Infrastruktur" (kurz: PKI) wird eine Sicherheitsinfrastruktur für eine technische Anlage verbunden, die Services für einen sicheren Austausch von Daten zwischen Kommunikationspartnern der technischen Anlage bereitstellt. Mit Hilfe der Public-Key Infrastruktur lassen sich Zertifikate ausstellen, verteilen und prüfen.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können mittels kryptografischer Verfahren verifiziert werden.

Bei einer Anlagenkomponente kann es sich beispielsweise um ein Gerät, insbesondere Feldgerät, eine Steuerungsvorrichtung, eine Applikation oder dergleichen handeln.

Bei dem Benutzer, der den wenigstens einen Zertifikatsantrag stellt, kann es sich beispielsweise um eine Person, etwa natürliche Person handeln. Ein den Zertifikatsantrag stellender Benutzer kann beispielsweise auch durch ein Unternehmen gegeben sein.

Das Hinzufügen des wenigstens einen Identitätsmerkmals zu der wenigstens einen Zertifikatsanfrage schließt besonders bevorzugt mit ein, dass das wenigstens eine Identitätsmerkmal in die wenigstens einen Zertifikatsanfrage eingebaut wird.

Für den Fall von "CMP over HTTPs" beispielsweise kann das wenigstens eine Identitätsmerkmal, welches eine bevorzugt lange Zeichenkette darstellen bzw. durch eine solche gegeben sein kann, in einem der HTTP Header übergeben werden. Das CRMF (Certifcate Request Message Format, Zertifikatsanfrage) bzw. die Certificate Signing Request CMP-Message wird bevorzugt bei der EE (end entity) erzeugt und bevorzugt auf dem Transportweg nicht verändert.

Das wenigstens eine Identitätsmerkmal repräsentiert die Identität und insbesondere die Rolle eines Benutzers (beispielsweise eine Person), der den wenigstens einen Zertifikatsantrag stellt.

Über das wenigstens eine Identitätsmerkmal, welches erfindungsgemäß dem Zertifikatsantrag hinzugefügt wird, kann sich der (jeweilige) Benutzer insbesondere gegenüber der Registrierungsstelle zuverlässig identifizieren.

Bei dem wenigstens eine Identitätsmerkmal handelt es sich zweckmäßiger Weise um ein kryptographisches und/oder vertrauenswürdiges Identitätsmerkmal.

Das wenigstens eine Identitätsmerkmal ist bevorzugt ein kryptographisch geschütztes und/oder (kryptographisch) signiertes Identitätsmerkmal.

Das wenigstens eine Identitätsmerkmal umfasst bevorzugt einen Namen des Benutzers und beispielsweise Rollen- und/oder Gruppenzugehörigkeiten bzw. -mitgliedschaften dieses.

Das wenigstens eine Identitätsmerkmal kann alternativ oder zusätzlich technische Verschlüsselungsdetails aufweisen. Bevorzugt umfasst es wenigstens einen Hash und/oder wenigstens eine Signatur, welche die Integrität der Information bestätigt.

Es kann sich ferner um ein in eine Zeichenkette (beispielsweise Base64) umgewandeltes Objekt, etwa ein in eine Zeichenkette umgewandeltes JSON-Objekt handeln.

Das wenigstens eine Identitätsmerkmal kann beispielsweise durch einen Token oder ein Zertifikat gegeben sein oder einen Token und/oder ein Zertifikat umfassen.

Das wenigstens eine Identitätsmerkmal umfasst in besonders bevorzugter Ausgestaltung wenigstens einen JSON Web Token (kurz: JWT) und/oder wenigstens eine (andere) Token-basierte Authentifizierung und/oder wenigstens einen UMC Claim.

Für die Übermittlung des wenigstens einen Zertifikatsantrages an die Registrierungsstelle kann ein Zertifikatsmanagementprotokoll zum Einsatz kommen. Es handelt sich bevorzugt um ein gängiges, im Kontext eines Zertifikatsmanagements für eine technische Anlage, insbesondere ein Leitsystem einer solchen üblicherweise verwendetes Protokoll, beispielsweise das Certificate Management Protocol (kurz: CMP, siehe beispielsweise RFC 4210/4211 der Internet Engineering Task Force (IETF)). CMP kann insbesondere über https realisiert sein bzw. werden.

Kommt beispielsweise CMP als Protokoll zum Einsatz und ist das wenigstens eine Identitätsmerkmal durch einen Token, insbesondere JWT-Token gegeben oder umfasst wenigstens einen solchen, wird der wenigstens eine (JWT-)Token bevorzugt in die Zertifikatsanfrage-CMP-Message (Certficate Signing Request CMP-Message) eingebaut. Besonders bevorzugt kann die Übergabe mit einem der http Header erfolgen, um möglichst ein bzw. das Original von CRMF (CMP) nicht zu verfälschen.

In weiterer bevorzugter Ausgestaltung des erfindungsgemäßen Verfahrens ist vorgesehen, dass die Registrierungsstelle das wenigstens eine Identitätsmerkmal und zu diesem gehörige Berechtigungen überprüft, und den wenigstens einen personalisierten Zertifikatsantrag genehmigt, sofern die Berechtigungen dies erlauben. Die Berechtigungen sind bevorzugt solche für die zu den Identitätsmerkmalen gehörigen Person, insbesondere der Person, die den personalisierten Zertifikatsantrag stellt bzw. dessen Stellung veranlasst.

Es kann vorgesehen sein, dass das wenigstens eine Identitätsmerkmal, über welches die Personalisierung erfolgt, von einem Identitätsprovider bereitgestellt wird. Bei dem Identitätsprovider handelt es sich bevorzugt um einen vertrauenswürdigen Identitätsprovider. Unter einem Identitätsprovider ist insbesondere eine Instanz zu verstehen, die auf einen Authentifizierungsvorgang eines Benutzers hin dem Benutzer wenigstens ein bevorzugt vertrauenswürdiges und/oder signiertes Identitätsmerkmal bereitstellen kann.

In der Regel ist für technische Anlagen ohnehin eine solche Instanz vorgesehen, welche für die Personalisierung und Identitätsprüfung genutzt werden kann. Es kann sich bei einem Identitätsprovider, welcher die Identitätsmerkmale bereitstellen kann, beispielsweise um das als "UMC" bezeichnete Produkt von Siemens handeln. UMC steht dabei für "User Management Component". Diese dient der zentralen Benutzerverwaltung zur Erhöhung der Anlagensicherheit und stellt in der Regel eine Option bzw. Erweiterung des TIA (Totally Integrated Automation) Portals von Siemens dar.

Der Identitätsprovider kann entsprechend durch eine der technischen Anlage zugeordnete Benutzermanagementkomponente und/oder einen einer solchen zugeordneten Server gegeben sein oder eine solche Benutzermanagementkomponente oder einen solchen Server umfassen. Bevorzugt sind auf dem Identitätsprovider, insbesondere in einer Benutzermanagementkomponente oder einem zugeordneten Server für verschiedene Personen verschiedene Berechtigungsprofile hinterlegt.

Kommt ein Identitätsprovider zum Einsatz, loggt sich der den wenigstens einen Zertifikatsantrag stellende Benutzer in weiterer vorteilhafter Ausgestaltung auf dem Identitätsprovider ein. Das wenigstens eine Identitätsmerkmal kann dann in Reaktion auf das Einloggen von dem Identitätsprovider bereitgestellt, insbesondere übermittelt werden, beispielsweise an die Anlagenkomponente, für die der Zertifikatsantrag übermittelt wird. Ein Login-Vorgang schließt bevorzugt ein, dass sich der Benutzer gegenüber dem Identitätsprovider identifiziert bzw. authentifiziert. Dies kann beispielsweise durch Eingabe eines Benutzernamens und/oder Passworts und/oder Verwendung einer Signaturkarte erfolgen.

Das wenigstens eine dem wenigstens einen Zertifikatsantrag hinzuzufügende Identitätsmerkmal wird bevorzugt bereitgestellt, indem es von dem Identitätsprovider an die Anlagenkomponente übermittelt wird.

Es kann ferner vorgesehen sein, dass die Registrierungsstelle, wenn sie einen personalisierten Zertifikatsantrag erhalten hat, den Identitätsprovider kontaktiert und von diesem die zu dem wenigstens einen Identitätsmerkmal gehörigen Berechtigungen abfragt. Diese Vorgehensweise hat sich als besonders geeignet erwiesen. Alsternativ oder zusätzlich kann die Registrierungsstelle die Berechtigungen auch von anderer Stelle abfragen bzw. ist es auch möglich, dass diese in der Registrierungsstelle hinterlegt sind.

Eine weitere vorteilhafte Ausführungsform zeichnet sich dadurch aus, dass die Anlagenkomponente selber das wenigstens eine bereitgestellte Identitätsmerkmal dem wenigstens einen Zertifikatsantrag hinzufügt, um diesen zu personalisieren. Alternativ oder zusätzlich kann der wenigstens eine personalisierte Zertifikatsantrag von der Anlagenkomponente selber an die Registrierungsstelle übermittelt wird. Diese Vorgehensweisen haben sich als besonders geeignet erwiesen.

Die Registrierungsstelle kann im Rahmen der Prüfung, ob ein Zertifikatsantrag zu genehmigen ist, zusätzlich prüfen, ob die Anlagenkomponente, die den Zertifikatsantrag stellt bzw. für die der Zertifikatsantrag gestellt wird, einem bestimmten Unternehmen zugeordnet werden kann.

Alternativ oder zusätzlich kann die Registrierungsstelle im Rahmen der Prüfung, ob ein Zertifikatsantrag zu genehmigen ist, zusätzlich prüfen, welchen Typ die Anlagekomponente aufweist und/oder ob ein Verwendungszweck des Zertifikatsantrags korrekt ist.

Die Erfindung betrifft darüber hinaus ein Leitsystem für eine technische Anlage. Diese umfasst bevorzugt Mittel zur Durchführung des erfindungsgemäßen Verfahrens.

Das erfindungsgemäße Leitsystem wird bevorzugt zum Betrieb einer technischen Anlage verwendet.

Unter einem Leitsystem wird im vorliegenden Kontext ein computergestütztes, technisches System verstanden, das Funktionalitäten zum Darstellen, Bedienen und Leiten einer technischen Anlage, etwa Fertigungs- oder Produktionsanlage umfasst. Das Leitsystem umfasst bevorzugt Sensoren zur Ermittlung von Messwerten sowie verschiedene Aktoren. Zudem umfasst das Leitsystem insbesondere sogenannte prozess- oder fertigungsnahe Komponenten, die zur Ansteuerung der Aktoren bzw. Sensoren dienen. Darüber hinaus weist das Leitsystem zweckmäßiger Weise u.a. Mittel zur Visualisierung der technischen Anlage und zu einem Engineering auf. Unter den Begriff Leitsystem sind zusätzlich auch weitere Recheneinheiten für komplexere Regelungen und Systeme zur Datenspeicherung und -verarbeitung zu fassen.

Gegenstand der Erfindung ist auch eine Komponente, insbesondere ein Gerät einer technischen Anlage, die dazu ausgebildet und/oder eingerichtet ist, Zertifikatsanträgen, die an eine Registrierungsstelle zu übermitteln sind, vor deren Übermittlung wenigstens ein Identitätsmerkmal, welches die Identität und insbesondere die Rolle eines den jeweiligen Zertifikatsantrag stellenden Benutzers repräsentiert, hinzuzufügen, wodurch die Zertifikatsanträge personalisiert werden. Die erfindungsgemäße Komponente ist bevorzugt dazu ausgebildet und/oder eingerichtet, das wenigstens eine Identitätsmerkmal in die wenigstens eine Zertifikatsanfrage einzubauen.

Die Erfindung betrifft ferner eine technische Anlage, insbesondere Fertigungs- oder Prozessanlage, die wenigstens ein erfindungsgemäßes Leitsystem und/oder wenigstens eine erfindungsgemäße Komponente umfasst.

Schließlich betrifft die Erfindung die Verwendung eines insbesondere vertrauenswürdigen Identitätsproviders für die Bereitstellung von Identitätsmerkmalen für die Personalisierung von an eine Registrierungsstelle zu richtende Zertifikatsanfragen für Komponenten einer technischen Anlage.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Darstellung zum Ablauf einer Zertifikatsanfrage und -vergabe gemäß zweier bekannter Varianten, und
- FIG 2: eine rein schematische Darstellung zum Ablauf einer Zertifikatsanfrage und -vergabe gemäß einem Ausführungsbeispiel der Erfindung.

In den Figuren sind gleiche Komponenten bzw. Elemente mit gleichen Bezugszeichen versehen.

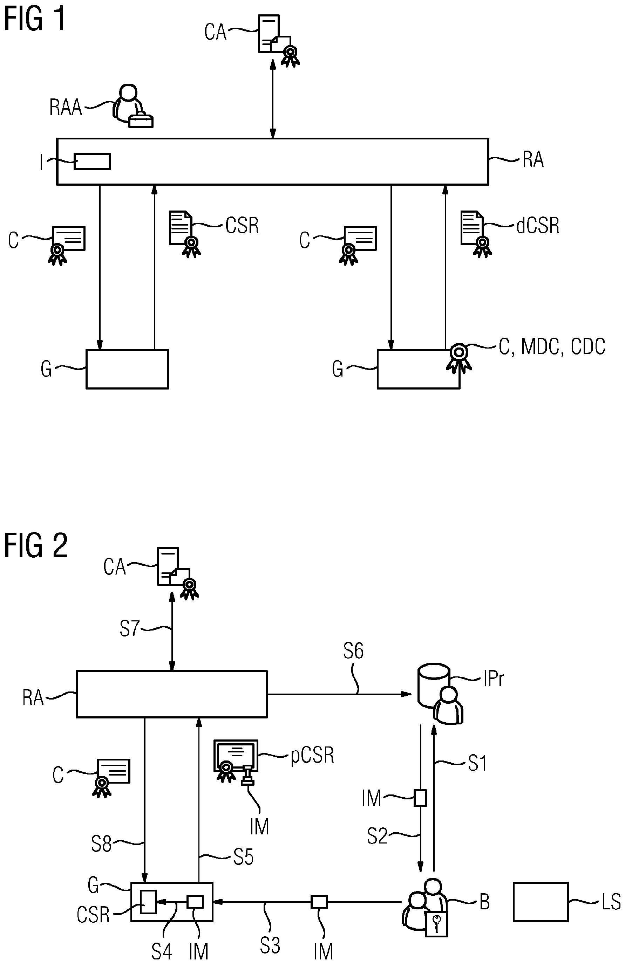

Die FIG 1 zeigt eine rein schematische Darstellung zum Ablauf einer Zertifikatsanfrage und -vergabe in einer technischen Anlage, etwa Prozess- oder Produktionsanlage, gemäß zweier verschiedener, vorbekannter Varianten. Dabei ist eine Variante in der linken und die zweite Variante in der rechten Hälfte der FIG 1 dargestellt.

Im Kontext einer technischen Anlage kommen zur Laufzeit digitale Zertifikate C zum Einsatz, die auch als operative Zertifikate bezeichnet werden. Über digitale/operative Zertifikate C wird eine sichere, nicht-kompromittierte und vertrauenswürdige Kommunikation zwischen unterschiedlichen Anlagenkomponenten, etwa Geräten G und/oder Applikationen, einer technischen Anlage ermöglicht.

Durch die Verwendung von Zertifikaten C kann beispielsweise eine Authentifikation und eine Kommunikationsintegrität von Kommunikationsteilnehmern der technischen Anlage durch kryptographische Mittel erreicht werden.

Im Rahmen einer Public Key Infrastruktur einer technischen Anlage werden sogenannte Registrierungsstellen RA verwendet, um Zertifikatsanträge CSR von Geräten G oder anderen Komponenten der Anlage entgegenzunehmen und sie - im Falle der Genehmigung/Validierung - an eine Zertifizierungsstelle CA weiterzuleiten. Dabei ist die RA die Instanz, die entscheidet, welche Zertifikatsanfragen CSR genehmigt/validiert werden und die CA die Instanz, welche die Zertifikate C erstellt. Die Zertifizierungsstelle CA bildet in der Regel den Kern einer Public-Key-Infrastruktur (PKI) einer technischen Anlage.

Bei den Zertifikatsanträgen CSR kann es sich um Anträge zwecks der initialen Beantragung (Bootstrapping) oder der Erneuerung (Update) von Zertifikaten C handeln.

Anlagenkomponenten, wie etwa Geräte G können die operativen Zertifikate, die sie für die Nutzung verschiedener sicherer Protokolle wie z.B. TLS oder OPC UA benötigen, dabei selbst beantragen. In der FIG 1 ist (für die linke und rechte Variante) dargestellt, wie ein Gerät G in der Rolle eines Clients bzw. eines Antragstellers einer in den Figuren nicht weiter dargestellten technischen Anlage einen solchen Antrag CSR an die RA der Anlage stellt. In der FIG 1 ist - in beiden Varianten - beispielshaft nur ein Gerät G einer Anlage gezeigt.

Die RA entscheidet, ob der Antrag CSR zu genehmigen/validieren ist und leitet den Antrag im Falle der Genehmigung/Validierung an die Zertifizierungsstelle CA weiter. Die CA kann sich beispielsweise in der Anlage ("Onsite-CA") oder auch einem Trust Center ("Offsite-CA" oder "CA as a Service") befinden.

Auf genehmigte/validierte und an die CA weitergeleitete Zertifikatsanträge CSR hin erstellt die CA ein Zertifikat C für das (jeweilige) anfragende Gerät G und dieses wird dem Gerät G übermittelt. In der FIG 1 ist dies durch entsprechende Pfeile dargestellt.

Nach Kenntnisstand der Anmelderin sind verschiedenen Ansätze bekannt, wie die RA eine Entscheidung treffen kann, ob eine Anfrage/ein Zertifikatsantrag CSR genehmigt/validiert und an die CA weitergeleitet und dann von dieser ein angefragtes Zertifikat C erstellt werden darf.

Ein der Anmelderin bekannter Ansatz (FIG 1 links) besteht darin, dass die Entscheidung über die Zertifikatsgenehmigung von einer Person RAA (auch als RA Administrator bezeichnet) getroffen wird. Diese Person RAA ist dann berechtigt, auf der RA die eingegangenen Zertifizierungsanfragen CSR zu genehmigen und/oder Geräte G noch vor der Zertifizierungsanfrage CSR in eine Whitelist (Inventory) I einzutragen.

Der Nachteil dieses Ansatzes ist die Notwendigkeit, den RA Administrator RAA verfügbar zu haben. Auch wenn in der konventionellen IT-Landschaft die Verfügbarkeit oftmals nicht kritisch ist, kann dies im industriellen Umfeld, etwa wenn ein dringender Umtausch eines Gerätes G einer technischen Anlage während einer Nachtschicht erforderlich ist, problematisch sein.

Der zweite der Anmelderin bekannte Ansatz (FIG 1 rechts) ist, digital signierte Zertifikatsanfragen dCSR an die RA zu senden. Dabei wird beim Bootstrapping der Zertifikatsantrag CSR in der Regel mit einem Herstellergerätezertifikat MDC signiert, während beim Update in der Regel das zuletzt ausgestellte operative Zertifikat C zum Signieren verwendet wird. Alternativ oder zusätzlich zum Gerätezertifikat MDC, das beispielsweise während der Fertigung des Geräts G von einer Zertifizierungsstelle des Herstellers des Geräts G ausgestellt werden bzw. worden sein kann, kann auch ein Kundengerätezertifikat CDC verwendet werden. Dabei handelt es sich in der Regel um ein Zertifikat, das das entsprechende Gerät G nach einer Prüfung in der technischen Anlage erhalten hat. In der FIG 1 rechts ist dargestellt, dass das Gerät G bereits über eines dieser Zertifikate MDC, C, CDC verfügt.

Damit die Registrierungsstelle RA die Zertifikatsanträge dCSR bearbeiten kann, muss ihr bei dieser Variante im Falle des Bootstrappings wenigstens ein Gerätezertifikat MDC (und/oder Kundenzertifikat CDC) und im Falle des Updates wenigstens ein operatives Zertifikat OC vorliegen. Der Nachteil dieses Ansatzes ist die Notwendigkeit, ein bereits existierendes Zertifikat MDC, OC, CDC zu verwenden, was unter Umständen software- und hardware-technisch sehr anspruchsvoll ist.

Die FIG 2 zeigt eine rein schematische Darstellung mit dem Ablauf eines Ausführungsbeispiel des erfindungsgemäßen Verfahrens, welches ein demgegenüber verbessertes Zertifikatsmanagement ermöglicht.

Dabei loggt sich in einem ersten Schritt S1 ein Benutzer B über einen in der Figur nicht weiter dargestellten PC auf einem Identitätsprovider IPr ein und erhält daraufhin von dem Identitätsprovider IPr Identitätsmerkmale IM (schritt S2). Bei den Identitätsmerkmalen IM handelt es sich um vertrauenswürdige, insbesondere signiertes Identitätsmerkmale IM. Bei dem hier beschriebenen Ausführungsbeispiel sind die Identitätsmerkmale IM durch einen JSON-Web-Token (auch kurz: JWT) gegeben. Andere Token-Arten sind alternativ oder zusätzlich dazu ebenfalls möglich. Der Token IM kann auch Berechtigungen des Benutzers umfassen. Dies ist jedoch nicht erforderlich.

Der Identitätsprovider IPr ist vorliegend durch eine der technischen Anlage zugeordnete Benutzermanagementkomponente gegeben, in der für verschiedene Personen verschiedene Berechtigungsprofile hinterlegt sind. In der Regel ist für technische Anlagen ohnehin eine solche Instanz vorgesehen, welche für die Personalisierung und Identitätsprüfung genutzt werden kann. Vorliegend handelt es sich um das als "UMC" bezeichnete Produkt von Siemens. UMC steht dabei für "User Management Component". Diese dient der zentralen Benutzerverwaltung zur Erhöhung der Anlagensicherheit und stellt in der Regel eine Option bzw. Erweiterung des TIA (Totally Integrated Automation) Portals von Siemens dar.

Die von dem Identitätsprovider IPr, vorliegend der UMC erhaltenen Identitätsmerkmale IM in Form des JSON-Web-Tokens werden in einem nächsten Schritt S3 von dem PC an das Gerät G übergeben.

Das Gerät G fügt die Identitätsmerkmale einer von dem Gerät G erstellten Zertifikatsantrag CSR vor der Übermittlung des Antrags an die RA hinzu, indem es den Token IM den Antrag CSR einbaut (Schritt S4). Hierdurch wird ein personalisierter Zertifikatsantrag pCSR erhalten und dieser wird in Schritt S5 an die RA übermittelt.

Für die Übermittlung der personalisierten Zertifikatsanfrage pCSR an die Registrierungsstelle RA kommt vorliegend ein gängiges, im Kontext eines Zertifikatsmanagements für eine technische Anlage bzw. ein Leitsystem einer solchen üblicherweise verwendetes Zertifikatsmanagementprotokoll zum Einsatz. Es handelt vorliegend um das Certificate Management Protocol (kurz: CMP, siehe beispielsweise RFC 4210/4211 der Internet Engineering Task Force (IETF)). CMP kann insbesondere über https realisiert sein bzw. werden. Die Identitätsmerkmale IM in Form des JWT-Tokens werden entsprechend in die Zertifikatsanfrage-CMP-Message (Certficate Signing Request CMP-Message) eingebaut.

Es sei angemerkt, dass alternativ oder zusätzlich dazu, dass die Identitätsmerkmale IM dem Zertifikatsantrag CSR von dem Gerät G selber hinzugefügt werden und das Gerät G selber den personalisierten Antrag pCSR an die RA übermittelt, dies auch von einer anderen Instanz abgewickelt werden kann, beispielsweise von einem Leitsystem LS der technischen Anlage bzw. einer darauf implementierten Instanz. Das (jeweilige) Gerät G kann dann beispielsweise einen von ihm erstellten Zertifikatsantrag CSR an das Leitsystem LS senden und das Leitsystem LS kann die vim Identitätsprovider IPr erhaltenen Identitätsmerkmale IM dem Antrag CSR hinzufügen, um ihn zu personalisieren und den personalisierten Zertifikatsantrag pCSR an die RA übermitteln. Das Leitsystem bzw. eine darauf implementierte Instanz kann dies auch zentral für mehrere Geräte abwickeln. Diese Schritte können auch über ein Ausführungsbeispiel eines erfindungsgemäßen bzw. einen Teil eines solchen realisiert werden.

Weiterhin sei angemerkt, dass es alternativ oder zusätzlich auch möglich ist, dass für das Leitsystem LS bzw. wenigstens eine Komponente, welche das Leitsystem LS umfasst, auf die erfindungsgemäße Weise wenigstens ein Zertifikatsantrag durch Hinzufügen von Identitätsmerkmalen IM personalisiert und in personalisiertem Zustand an die RA übermittelt wird.

Die Entscheidung, ob der personalisierte Zertifikatsantrag pCSR genehmigt wird, wird von der RA unter Berücksichtigung der hinzugefügten Identitätsmerkmale IM getroffen. Konkret überprüft die RA die Identitätsmerkmale IM und die Berechtigungen für den entsprechenden Benutzer B und falls die Berechtigungen es erlauben, wird die personalisierte Zertifikatsanfrage pCSR genehmigt/validiert.

Bei dem in FIG 2 dargestellten Ausführungsbeispiel kontaktiert die RA hierzu den Identitätsprovider IPr (Schritt S6) und überprüft die Identifikation. Sie ermittelt ferner, welche Berechtigungen der Benutzer B aufgrund seiner Rolle hat. Dabei ruft die RA von einer Datenbank, welche die RA bei dem dargestellten Ausführungsbeispiel umfasst und auf der Berechtigungen bzw. Berechtigungsprofile für verschiedene Benutzer hinterlegt sind, diejenige Berechtigungen bzw. dasjenige Berechtigungsprofil ab, dass zu den Identitätsmerkmalen IM und somit dem Benutzer B gehört und zieht diese für die Entscheidung heran. Es sei angemerkt, dass eine Datenbank mit Berechtigungsinformationen, auf welche die RA zugreift, natürlich auch separat zu der RA vorgesehen sein kann.

Alternativ oder zusätzlich dazu, dass die RA den Identitätsprovider IPr kontaktiert, um die Berechtigungen abzufragen, können diese auch auf der RA und/oder an anderer Stelle hinterlegt sein.

Für den Fall, dass der personalisierte Zertifikatsantrag pCSR von der Registrierungsstelle RA genehmigt wird, kontaktiert die Registrierungsstelle RA die Zertifizierungsstelle CA (Schritt S7). Die Zertifizierungsstelle CA wird dann veranlasst, wie beantrag ein Zertifikat C für das Gerät G zu erstellen. Das erstellte Zertifikat C wird dem Gerät dann übermittelt (Schritt S8). Diese Schritte sind völlig analog zu den vorbekannten Varianten gemäß FIG 1.

Es sei angemerkt, dass das in FIG 2 dargestellte Gerät 2, das dazu ausgebildet und eingerichtet ist, Zertifikatsanträgen CSR, die an eine Registrierungsstelle RA zu übermitteln sind, vor deren Übermittlung wenigstens ein Identitätsmerkmal IM, welches die Identität und insbesondere die Rolle einer den jeweiligen Zertifikatsantrag CSR stellenden Person B repräsentiert, hinzuzufügen, wodurch die Zertifikatsanträge pCSR personalisiert werden, ein Ausführungsbeispiel einer erfindungsgemäßen Komponente darstellt.

Die technische Anlage, welche das Gerät G als Komponente gehört, stellt ferner ein Ausführungsbeispiel einer erfindungsgemäßen technischen Anlage dar.

Die vorstehend beschriebene Verwendung des Identitätsproviders IPr für die Bereitstellung von Identitätsmerkmalen IM für die Personalisierung von an die Registrierungsstelle RA zu richtende Zertifikatsanfragen CSR Komponenten G der technischen Anlage stellt ferner ein Beispiel einer erfindungsgemäßen Verwendung eines Identitätsproviders dar.

Für den Fall, dass alternativ oder zusätzlich dazu, dass das Gerät G die Identitätsmerkmale IM dem Antrag CSRE hinzufügt und diesen an die RA sendet, dies von einem Leitsystem LS der Anlage abgewickelt wird, stellt das Leitsystem ein Ausführungsbeispiel eines erfindungsgemäßen Leitsystems dar, welches Mittel zur Durchführung eines erfindungsgemäßen Verfahrens umfasst.

Durch die erfindungsgemäße Vorgehensweise wird die Entscheidung über die Zertifizierungsgenehmigung vorteilhaft an andere Personen als den RA Administrator RAA delegiert. Statt des RAA können die Anlagen-Betreuer diese Entscheidung treffen. Dies ist aus Workflow-Sicht und aus Verfügbarkeitsgründen von Vorteil. Die Entscheidungen, welche der personalisierten Zertifikatsanträge pCSR zu validieren, also zu genehmigen sind, können dann diejenigen Personen treffen, die die Anlage betreuen und nicht die, die sich mit der IT-Verwaltung beschäftigen.

Die Verwaltung einer technischen Anlage kann deutlich vereinfacht werden. Es können deutlich mehr Zertifikatsanfragen automatisiert von einer Registrierungsstelle RA verarbeitet werden, wenn diese auf die erfindungsgemäße Weise in personalisierter Form mit wenigstens einem insbesondere signierten Identitätsmerkmal übermittelter werden. Die Benutzerfreundlichkeit kann deutlich erhöht werden.

Mehrere Divisionen können die erfindungsgemäße Lösung basierend auf einem Identitätsprovider IPR, etwa UMC mitverwenden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Beispielsweise versteht sich, dass, auch wenn in der FIG 2 nur ein Gerät G einer technischen Anlage beispielhaft gezeigt ist, die beschriebenen Schritte selbstverständlich auch für mehrere Geräte und/oder andere Komponenten einer technischen Anlage durchgeführt werden können.

## Patentansprüche

1. Verfahren zur Vergabe von Zertifikaten (C) für Anlagenkomponenten (G) einer technischen Anlage, bei dem für Anlagenkomponenten (G) Zertifikatsanträge (CSR) an eine Registrierungsstelle (RA) übermittelt werden, und die Registrierungsstelle (RA) entscheidet, welche Zertifikatsanträge (CSR) genehmigt werden, wobei auf genehmigte Zertifikatsanträge (CSR) hin ein Zertifikat (C) erstellt und bevorzugt der jeweiligen Anlagenkomponente (G) übermittelt wird,
**dadurch gekennzeichnet, dass**
vor der Übermittelung wenigstens eines Zertifikatsantrages (CSR) an die Registrierungsstelle (RA) wenigstens ein Identitätsmerkmal (IM), welches die Identität und insbesondere die Rolle eines den wenigstens einen Zertifikatsantrag (CSR) stellenden Benutzers (B) repräsentiert, bereitgestellt wird, und das wenigstens eine Identitätsmerkmal (IM) dem wenigstens einen Zertifikatsantrag (CSR) hinzugefügt wird, wodurch dieser personalisiert wird, und der wenigstens eine personalisierte Zertifikatsantrag (pCSR) an die Registrierungsstelle (RA) übermittelt wird, und die Entscheidung, ob der wenigstens eine personalisierte Zertifikatsantrag (pCSR) genehmigt wird, unter Berücksichtigung des wenigstens einen hinzugefügten Identitätsmerkmals (IM) getroffen wird.

2. Verfahren nach Anspruch 1,
**dadurch gekennzeichnet, dass**
die Registrierungsstelle (RA) das wenigstens eine Identitätsmerkmal (IM) und zu diesem gehörige Berechtigungen überprüft, und den wenigstens einen personalisierten Zertifikatsantrag (pCSR) genehmigt, sofern die Berechtigungen dies erlauben.

3. Verfahren nach Anspruch 1 oder 2,
**dadurch gekennzeichnet, dass**
das wenigstens eine Identitätsmerkmal (IM) von einem Identitätsprovider (IPr) bereitgestellt wird, wobei sich bevorzugt der den wenigstens einen Zertifikatsantrag (pCSR) stellende Benutzer (B) auf dem Identitätsprovider (IPr) einloggt, und das wenigstens eine Identitätsmerkmal (IM) in Reaktion auf das Einloggen von dem Identitätsprovider (IPr) bereitgestellt, insbesondere übermittelt wird.

4. Verfahren nach Anspruch 3,
**dadurch gekennzeichnet, dass**
der Identitätsprovider (IPr) durch eine der technischen Anlage zugeordnete Benutzermanagementkomponente und/oder einen einer solchen zugeordneten Server gegeben ist oder eine solche Benutzermanagementkomponente oder einen solchen Server umfasst, und bevorzugt in der Benutzermanagementkomponente oder dem zugeordneten Server für verschiedene Benutzer (B) verschiedene Berechtigungsprofile hinterlegt sind.

5. Verfahren nach Anspruch 3 oder 4,
**dadurch gekennzeichnet, dass**
das wenigstens eine dem wenigstens einen Zertifikatsantrag (CSR) hinzuzufügende Identitätsmerkmal (IM) bereitgestellt wird, indem es von dem Identitätsprovider (IPr) an die Anlagenkomponente (G) übermittelt wird.

6. Verfahren nach einem der Ansprüche 3 bis 5,
**dadurch gekennzeichnet, dass**
die Registrierungsstelle (RA), wenn sie einen personalisierten Zertifikatsantrag (pCSR) erhalten hat, den Identitätsprovider (IPr) kontaktiert und die Identität desjenigen Benutzers (B), der den personalisierten Zertifikatsantrag (pCSR) gestellt hat, prüft und/oder von dem Identitätsprovider (IPr) und/oder einer Datenbank die zu dem wenigstens einen Identitätsmerkmal (IM) gehörigen Berechtigungen abfragt.

7. Verfahren nach einem der vorhergehenden Ansprüche,
**dadurch gekennzeichnet, dass**
die Anlagenkomponente (G) selber das wenigstens eine bereitgestellte Identitätsmerkmal (IM) dem wenigstens einen Zertifikatsantrag (CSR) hinzufügt, um diesen zu personalisieren, und/oder der wenigstens eine personalisierte Zertifikatsantrag (pCSR) von der Anlagenkomponente (G) selber an die Registrierungsstelle (RA) übermittelt wird.

8. Verfahren nach einem der vorhergehenden Ansprüche,
**dadurch gekennzeichnet, dass**
das wenigstens eine Identitätsmerkmal (IM) ein vertrauenswürdiges, insbesondere signiertes Identitätsmerkmal (IM) ist, und/oder dass das wenigstens eine Identitätsmerkmal (IM) durch einen Token oder ein Zertifikat gegeben ist oder ein Token und/oder ein Zertifikat umfasst.

9. Verfahren nach einem der vorhergehenden Ansprüche,
**dadurch gekennzeichnet, dass**
für den Fall, dass der wenigstens eine personalisierte Zertifikatsantrag e (pCSR) von der Registrierungsstelle (RA) genehmigt wird, die Registrierungsstelle (RA) eine Zertifizierungsstelle (CA) kontaktiert und die Zertifizierungsstelle (CA) veranlasst wird, ein Zertifikat (C) für die wenigstens eine Anlagenkomponente (G) zu erstellen.

10. Leitsystem (LS) für eine technische Anlage, umfassend Mittel zur Durchführung des Verfahrens nach einem der Ansprüche 1 bis 9.

11. Komponente (G), insbesondere Gerät einer technischen Anlage, die dazu ausgebildet und/oder eingerichtet ist, Zertifikatsanträgen (CSR), die an eine Registrierungsstelle (RA) zu übermitteln sind, vor deren Übermittlung wenigstens ein Identitätsmerkmal (IM), welches die Identität und insbesondere die Rolle eines den jeweiligen Zertifikatsantrag (CSR) stellenden Benutzers (B) repräsentiert, hinzuzufügen, wodurch die Zertifikatsanträge (CSR) personalisiert werden.

12. Technische Anlage, insbesondere Fertigungs- oder Prozessanlage, die wenigstens ein Leitsystem (LS) gemäß Anspruch 10 und/oder wenigstens eine Komponente gemäß Anspruch 11 umfasst.

13. Verwendung eines Leitsystems (LS) gemäß Anspruch 10 zum Betrieb einer technischen Anlage.

14. Verwendung eines Identitätsproviders (IPr) für die Bereitstellung von Identitätsmerkmalen (IM) für die Personalisierung von an eine Registrierungsstelle (RA) zu richtende Zertifikatsanfragen (CSR) für Komponenten (G) einer technischen Anlage.
